# EUROPEAN PATENT APPLICATION

(11) **EP 3 789 324 A1**
(43) Date of publication of application: **10.03.2021**
(21) Application number: 20191733.3
(22) Date of filing: 19.08.2020
(51) Int. Cl.: B65G 47/90, B65B 43/14, B65H 31/00, B65H 31/30, B65D 25/04

(54) **BAG BUNDLE PICKUP SYSTEM AND STORAGE UNIT**

(30) Priority: 30.08.2019 JP 2019157763
(71) Applicant: Toyo Jidoki Co., Ltd., Tokyo 108-0014 (JP)
(72) Inventor: MORINO, Manabu, Iwakuni-shi, Yamaguchi (JP); FUKUNAGA, Kazuo, Iwakuni-shi (JP); KAJIHARA, Shota, Iwakuni-shi (JP); UTSUNOMIYA, Takayuki, Iwakuni-shi (JP)
(74) Representative: Grünecker Patent- und Rechtsanwälte PartG mbB

(57) **Abstract**

A bag bundle pickup system (10) includes: a storage unit (11) in which one or more bag bundles (80) are stored; and a pickup unit (12) which takes out the one or more bag bundles (80) from the storage unit (11). Each bag bundles (80) includes bags (81) and has a thick part (91, 92) having a locally large thickness. The storage unit (11) includes: a support portion (21); and an entry space (S1) located below a bag bundle (80) when the bag bundle (80) is placed on each support portion (21). The pickup unit (12) includes a holding device (70a, 70b) which enters the entry space (S1) and holds a bag bundle (80) located above the entry space (S1), each support portion (21) has a contact part (28) which comes into contact with a bag bundle (80) being placed thereon, and a part of a bag bundle (80) other than the thick part (91, 92) is placed on a contact top part (29) which is located at a highest position of the contact part (28).

## Description

### TECHNICAL FIELD

The present disclosure relates to a storage unit that stores a bag bundle and a bag bundle pickup system that takes out a bag bundle from a storage unit.

### BACKGROUND ART

When a bag bundle stored in a storage unit is lifted, the upper and lower surfaces of the bag bundle may be sandwiched and held between holding devices such as gripping claws. In particular, it is difficult to stably hold a bag bundle, composed of a plurality of flexible bags, from the side, and from the viewpoint of stable holding, it is preferable to place a bag bundle on the lower holding portion to support it from below.

When the entire lower surface of a bag bundle is in contact with a storage unit, it is not easy to insert a holding device between the storage unit and the lower surface of the bag bundle. When a holding device is forcibly inserted between the lower surface of a bag bundle and a storage unit, there is concern that bags included in the bag bundle (in particular, bags located in the lower position) are pushed by the holding device to be creased or torn.

In order to avoid such crease formation and damage of bags, it is effective to form a recess space on the placing surface of a storage unit, to place a bag bundle on the placing surface in such a manner that a part of the lower surface of the bag bundle faces the recess space, and to support the lower surface of the bag bundle with a holding device that has entered the recess space. For example, in the apparatus disclosed in Japanese patent application publication No. 2002-41122, a claw is inserted into a notch formed in the bottom surface of a holder and the claw supports a plastic bag from below.

### SUMMARY OF INVENTION

### Technical Problem

When each bag is a flat bag having an almost uniform thickness throughout, a bag bundle including those bags also has an almost uniform thickness throughout. On the other hand, in a case of a bag including a locally different thick part such as a spout-equipped bag or a self-standing bag (in particular, a bag including a part having a locally increased thickness), a bag bundle may also have a locally thick part (hereinafter also referred to as "thick part"). In particular, when the postures and directions of the bags included in a bag bundle are adjusted to conform with each other in such a manner that portions having larger thicknesses of the bags are stacked, the thickness of the thick part of the bag bundle is cumulatively increased.

When a bag bundle having a thick part is placed on a flat placing surface, the thick part extends higher than the other portions. In order to prevent the posture of a bag bundle from collapsing, the storage unit is required to properly support the thick part. The support structure of such a storage unit requires a height equal to or greater than the thick part and consequently occupies a large space in the height direction. In particular, when the placing surface has a recess space which enables a holding device to enter below a bag bundle, the storage unit is required to have a space extending in the height direction for the recess space in addition to a space extending in the height direction for the structure that supports the thick part of a bag bundle.

In addition, when a bag bundle having a thick part is placed on a flat placing surface, bags located in the lower position are supported in a state close to a flat state and are subject to influence of their own weight, and therefore may be stored in a storage unit in a stable state. On the other hand, bags located in the upper position are supported in a state of being bent upward at the thick part and are subject to relatively small influence of their own weight, and therefore it is easy to collapse the posture of them and it is difficult to store them in a storage unit in a stable state.

The present invention has been made in view of the above circumstances, and an object of the present invention is to provide techniques which make it possible to support a bag bundle having a locally thick part in a stable state in a storage unit while curbing expansion in the height direction of the occupation space of the storage unit.

### Solution to Problem

One aspect of the present disclosure is directed to a bag bundle pickup system comprising: a storage unit in which one or more bag bundles are stored; and a pickup unit which takes out the one or more bag bundles from the storage unit, wherein: each of the one or more bag bundles includes a plurality of bags and has a thick part having a locally large thickness, the storage unit includes: one or more support portions each of which a bag bundle is placed on; and an entry space located below a bag bundle when the bag bundle is placed on each support portion, the pickup unit includes a holding device which at least partially enters the entry space and holds a bag bundle located above the entry space, each support portion has a contact part which comes into contact with a bag bundle being placed thereon, and a part of a bag bundle other than the thick part is placed on a contact top part which is located at a highest position of the contact part of each support portion.

Each support portion may include a thickness arrangement cutout which defines a thickness arrangement space, and at least a part of the thick part of a bag bundle placed on each support portion may be positioned in the thickness arrangement space of each support portion.

Each support portion may include an entry forming cutout which defines the entry space.

Each support portion may include an entry forming cutout which defines the entry space, and the contact top part of each support portion may be positioned between the thickness arrangement cutout and the entry forming cutout in a horizontal direction.

The bag bundle pickup system may comprise a first compartment portion which divides a space of the storage unit into two or more storage spaces in a first horizontal direction, wherein: a support portion and an entry space may be provided in each of the two or more storage spaces, the first compartment portion may include a communication space connecting storage spaces which are positioned adjacent to each other in the first horizontal direction, and at least a part of the holding device may move, through the communication space, between the storage spaces which are positioned adjacent to each other in the first horizontal direction.

Each support portion may include a plurality of plate-shaped members which extend in a height direction and are positioned away from each other in a horizontal direction, and the contact part may be configured by upper end surfaces of the plurality of plate-shaped members.

The bag bundle pickup system may comprise a second compartment portion which divides a space of the storage unit into two or more storage spaces in a second horizontal direction, wherein: a support portion and an entry space may be provided in each of the two or more storage spaces, and each of the plurality of plate-shaped members may penetrate the second compartment portion in the second horizontal direction and may extend over storage spaces positioned adjacent to each other in the second horizontal direction.

Another aspect of the present disclosure is directed to a storage unit in which one or more bag bundles are stored, the storage unit comprising: one or more support portions each of which a bag bundle is placed on; and an entry space which is located below a bag bundle when the bag bundle is placed on each support portion, wherein: each of the one or more bag bundles includes a plurality of bags and has a thick part having a locally large thickness, each support portion has a contact part which comes into contact with a bag bundle being placed thereon, and a part of a bag bundle other than the thick part is placed on a contact top part which is located at a highest position of the contact part of each support portion.

According to the present disclosure, a bag bundle having a locally thick part can be held in a stable state in a storage unit while curbing expansion in the height direction of the occupation space of the storage unit.

### BRIEF DESCRIPTION OF DRAWINGS

Fig. 1 is a block diagram illustrating an example of a basic configuration of a bag bundle pickup system.
Fig. 2 is a perspective view illustrating an example of a storage unit.
Fig. 3 is a plan view of a bag included in a bag bundle.
Fig. 4 is a sectional view of the bag taken along section line IV-IV shown in Fig. 3.
Fig. 5 is a cross-sectional view illustrating an example of an operating state of a bag bundle pickup system.
Fig. 6 is a side view illustrating a state where a bag bundle is held by a holding device.
Fig. 7 is a perspective view of a base assembly.
Fig. 8 is a view of a second base unit as seen from below.

### DESCRIPTION OF EMBODIMENTS

An embodiment of the present invention is described below with reference to the drawings.

In the following description, unless otherwise specified, the height direction means a direction being parallel to and along the vertical direction in which gravity acts, and the up-and-down direction is based on the height direction. The horizontal direction is a direction perpendicular to the height direction.

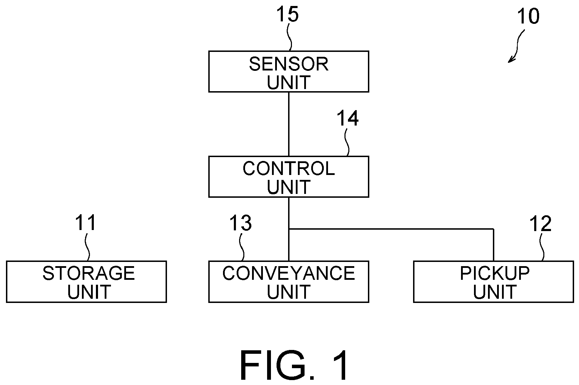

Fig. 1 is a block diagram illustrating an example of a basic configuration of a bag bundle pickup system 10.

The bag bundle pickup system 10 includes: a storage unit 11 that stores one or more bag bundles; a pickup unit 12 that takes out one or more bag bundles from the storage unit 11; a conveyance unit 13 that conveys the storage unit 11; a control unit 14 that controls the pickup unit 12 and the conveyance unit 13; and a sensor unit 15 that transmits detection results to the control unit 14.

The control unit 14 controls the pickup unit 12 and the conveyance unit 13. The illustrated control unit 14 controls the pickup unit 12 and the conveyance unit 13 based on the detection results given from the sensor unit 15, but the control unit 14 may control the pickup unit 12 and the conveyance unit 13 regardless of the detection results given from the sensor unit 15. For example, the control unit 14 may control the pickup unit 12 and the conveyance unit 13 according to a predetermined sequence.

The sensor unit 15 includes one or more sensors and detects various kinds of information. The one or more sensors included in the sensor unit 15 are not limited. Typically, the sensor unit 15 may include a sensor (for example, an optical sensor) that detects the presence or absence of a bag bundle in the storage unit 11, a sensor that detects the position of the storage unit 11 being conveyed by the conveyance unit 13, and a sensor that detects whether an unauthorized person and/or an unauthorized object is present in an off-limits area. Places where one or more sensors included in the sensor unit 15 are installed are not limited. A sensor may be installed in at least one of the storage unit 11, the conveyance unit 13 and the pickup unit 12, and may be installed in another place. The sensor unit 15 may not be provided.

The configuration of the conveyance unit 13 is not limited. For example, the conveyance unit 13 may be configured by using a belt conveyor (not illustrated) having a belt on which the storage unit 11 is to be placed. When it is not necessary to convey the storage unit 11, the conveyance unit 13 may not be provided. For example, the storage unit 11 may be carried to a predetermined pickup place by a human.

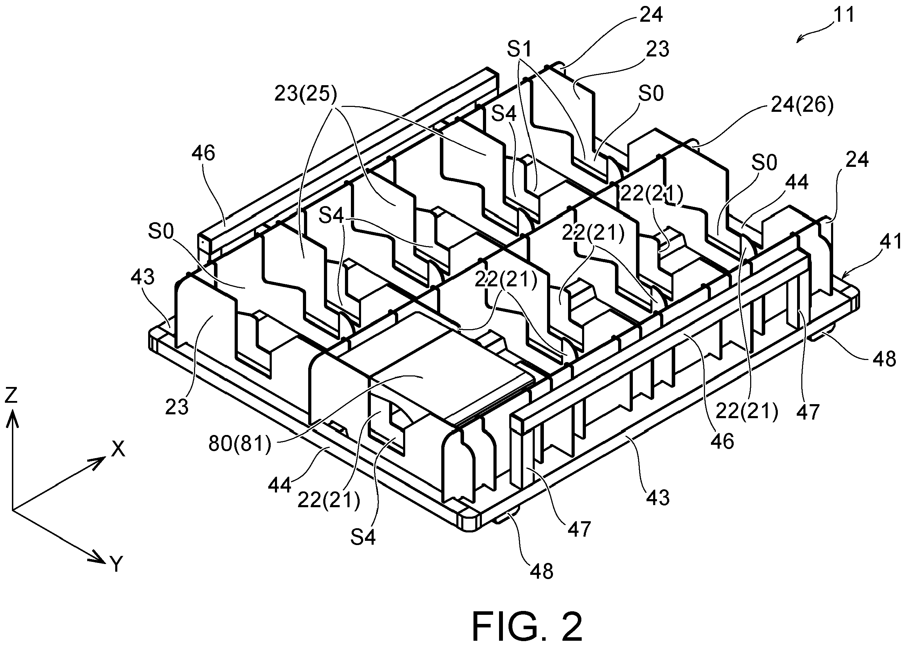

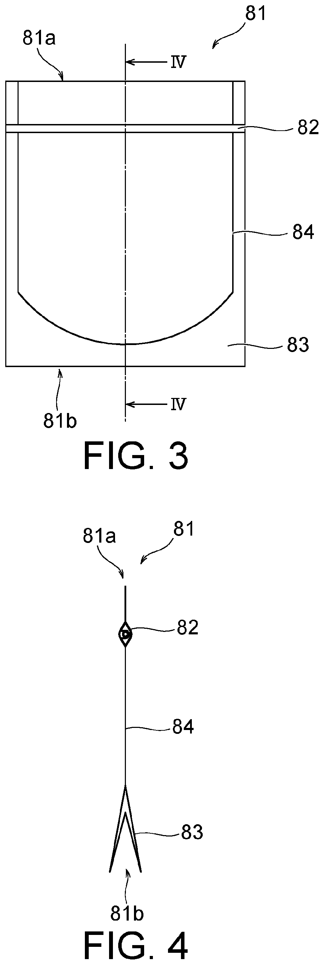

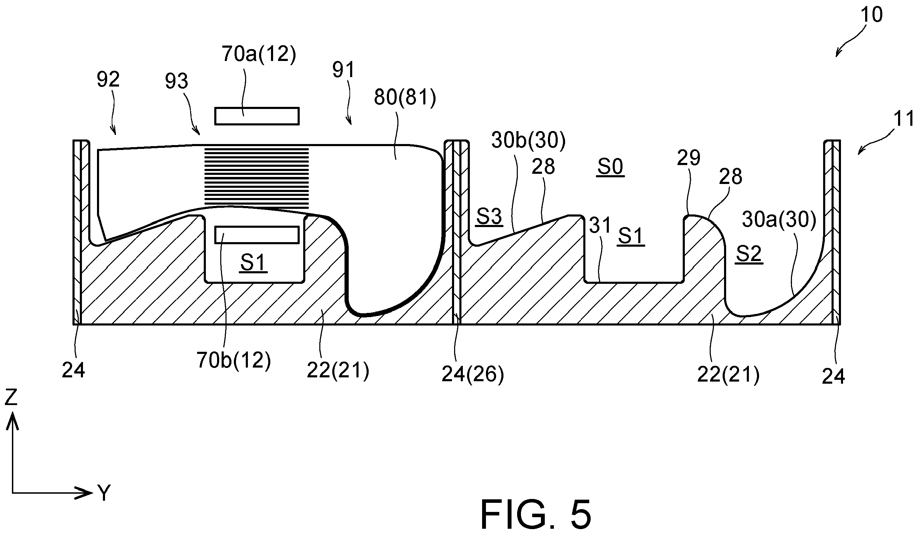

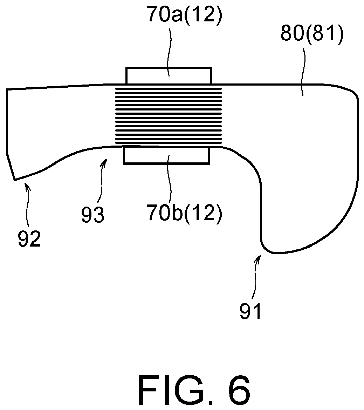

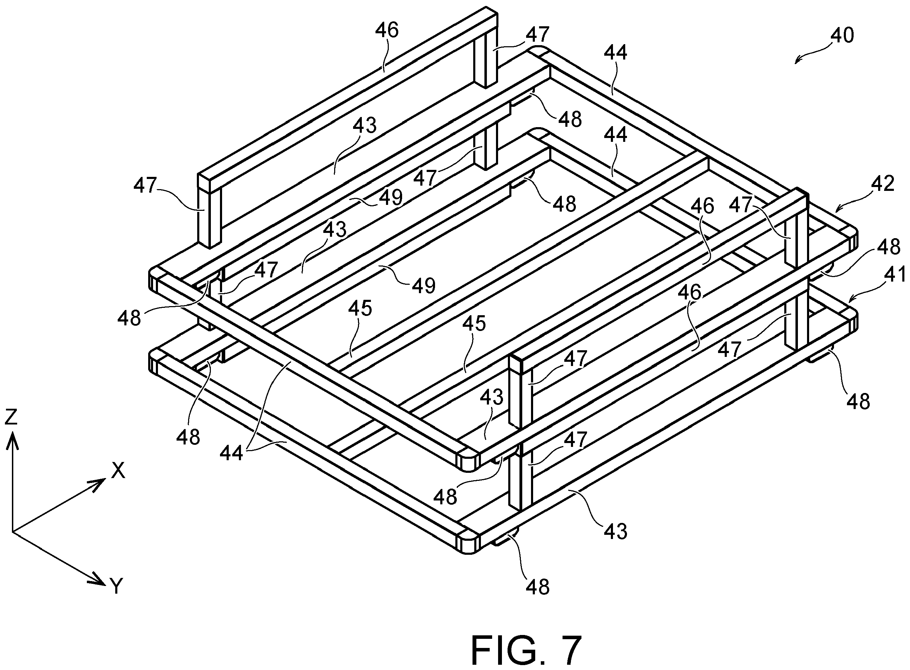

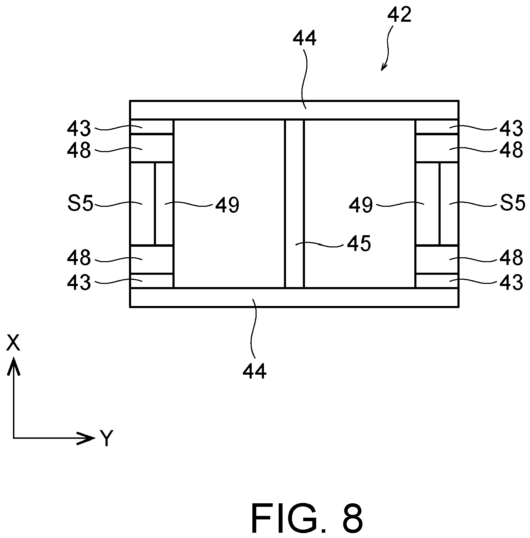

Fig. 2 is a perspective view illustrating an example of the storage unit 11. Fig. 3 is a plan view of a bag 81 included in a bag bundle 80. Fig. 4 is a sectional view of the bag 81 taken along section line IV-IV shown in Fig. 3. Fig. 5 is a cross-sectional view illustrating an example of an operating state of the bag bundle pickup system 10. Fig. 6 is a side view illustrating a state where a bag bundle 80 is held by a holding device (i.e., an upper holding device 70a and a lower holding device 70b). Fig. 7 is a perspective view of a base assembly 40. Fig. 8 is a view of a second base unit 42 as seen from below.

In the present embodiment, a plurality of bag bundles 80 are stored in the storage unit 11. Fig. 2 illustrates only one bag bundle 80 in order to explain the configuration of the storage unit 11 and illustration of the other bag bundles 80 are omitted in Fig.2. Further, Fig. 2 shows the configuration of the storage unit 11 for one stage only, but the storage unit 11 of the present embodiment has a multi-stage configuration (specifically, a two-stage configuration) (see Fig. 7).

Each bag bundle 80 includes a plurality of bags 81 and has local thick parts (that is, a first thick part 91 and a second thick part 92 (see Figs. 5 and 6)) which have larger thickness. The number of bags 81 included in each bag bundle 80 is not limited, and for example, approximately 50 to 100 bags 81 may be included in each bag bundle 80.

A bag 81, illustrated in Figs. 3 and 4, includes a chuck portion 82 provided near a mouth portion 81a, a self-standing portion 83 formed in a bottom portion 81b, and a thin layer portion 84 extending between the chuck portion 82 and the self-standing portion 83. The chuck portion 82 is constituted by, for example, a member (such as a fastener) different from the bag body, and seals the inside of the bag 81 or opens the inside of the bag 81 to the outside through the mouth portion 81a. The self-standing portion 83 has a folding structure in which portions of the bag body are superimposed on one another, and can serve as a support part for making the bag 81 stand by itself by being unfolded in the horizontal direction. The thin layer portion 84 is formed of the bag body and is formed by stacking the front side wall portion and the rear side wall portion of the bag in layers. In a state where the inner volume of a bag 81 is almost zero (0) or close to zero, the bag 81 has a shape that spreads thin as a whole, the chuck portion 82 and the self-standing portion 83 each have a larger thickness than the thin layer portion 84, and the chuck portion 82 has a larger thickness than the self-standing portion 83.

All the bags 81 included in each bag bundle 80 are stacked on each other in a state of having the same orientation and the same posture. Thus, as shown in Figs. 5 and 6, each bag bundle 80 has a first thick part 91 at a position corresponding to the chuck portions 82 of the respective bags 81, has a second thick part 92 at a position corresponding to the self-standing portions 83 of the respective bags 81, and has a thin layer forming portion 93 at a position corresponding to the thin layer portions 84 of the respective bags 81. The first thick part 91 and the second thick part 92 each have a larger thickness than the thin layer forming portion 93, and the first thick part 91 has a larger thickness than the second thick part 92.

The storage unit 11 includes one or more support portions 21 (in the present embodiment, a plurality of support portions 21) each of which a bag bundle 80 is placed on, and entry spaces S1 (see Fig. 5) each of which is to be located below a bag bundle 80 when the bag bundle 80 is placed on each support portion 21.

Each support portion 21 supports a bag bundle 80 placed on it, from below. Each support portion 21 of the present embodiment includes a plurality of plate-shaped members 22 that are positioned horizontally apart from each other. Each plate-shaped member 22 extends in the height direction (i.e., the Z direction) and extends in the horizontal direction. Each of the illustrated supporting portions 21 includes two plate-shaped members 22 that are located apart from each other in a first horizontal direction (i.e., the X direction), and each plate-shaped member 22 extends in a second horizontal direction (i.e., the Y direction) that is perpendicular to the first horizontal direction.

Each plate-shaped member 22 of each support portion 21 has thickness arrangement cutouts 30 that define thickness arrangement spaces (i.e., a first thickness arrangement space S2 and a second thickness arrangement space S3 (see Fig. 5)). Each illustrated plate-shaped member 22 has a first thickness arrangement cutout 30a and a second thickness arrangement cutout 30b. The first thickness arrangement cutout 30a defines a first thickness arrangement space S2 in which the first thick part 91 of a bag bundle 80 is intended to be arranged. The second thickness arrangement cutout 30b defines a second thickness arrangement space S3 in which the second thick part 92 of a bag bundle 80 is intended to be arranged. The thick parts (i.e., the first thick part 91 and the second thick part 92) of a bag bundle 80 placed on a support portion 21 are partially located in the thickness arrangement spaces (i.e., the first thickness arrangement space S2 and the second thickness arrangement space S3).

Each plate-shaped member 22 of each support portion 21 has an entry forming cutout 31 that defines an entry space S1 (see Fig. 5). When a bag bundle 80 is held, at least a part of the holding device (in particular, the lower holding device 70b) included in the pickup unit 12 enters the entry space S1.

The holding device holds a bag bundle 80 positioned above an entry space S1. The holding device of the present embodiment includes an upper holding device 70a and a lower holding device 70b as shown in Figs 5 and 6. A bag bundle 80 is sandwiched between the upper holding device 70a located above the bag bundle 80 and the lower holding device 70b located below the bag bundle 80 in such a manner that the bag bundle 80 is held so as to be able to be lifted.

The upper holding device 70a and the lower holding device 70b are provided so as to be movable in the height direction and in the horizontal direction in an integrated manner. Further, the upper holding device 70a and the lower holding device 70b are movably provided so as to be able to exhibit behaviors different from each other in the height direction, and for example, may be provided so as to exhibit symmetrical behaviors in the height direction. The pickup unit 12 includes a drive mechanism (not shown) that is driven under the control of the control unit 14, and the upper holding device 70a and the lower holding device 70b are operated by power transmitted via the drive mechanism. The drive mechanism can be easily configured by using a mechanism known to those skilled in the art, and description of a specific example of the drive mechanism is omitted.

Each support portion 21 has contact parts 28 that come into contact with a bag bundle 80 placed on each support portion 21. In the illustrated example, the contact parts 28 are formed by the upper end surface (that is, the end surface facing upward) of each plate-shaped member 22.

The contact top part 29 which is located at the highest position of the contact parts 28 of each support portion 21 is placed between a thickness arrangement cutout 30 and the entry forming cutout 31 in the horizontal direction, a part of a bag bundle 80 other than the thick parts is placed on the contact top part 29. The illustrated contact top part 29 is positioned between the first thickness arrangement cutout 30a and the entry forming cutout 31 in the second horizontal direction (i.e., the Y direction) (in other words, between the first thickness arrangement space S2 and the entry space S1), and the thin layer forming portion 93 of a bag bundle 80 is placed on the contact top part 29 (see Fig. 5).

The space inside the storage unit 11 is divided into a plurality of storage spaces S0, and one support portion 21 is arranged in each storage space S0. In the example shown in Fig. 2, a plurality of storage spaces S0 (i.e., eight storage spaces S0) are defined by a plurality of plate-shaped side partitions 23 (i.e., five plate-shaped side partitions 23) and a plurality of plate-shaped front-rear partitions 24 (i.e., three plate-shaped front-rear partitions 24). The side partitions 23 are provided at equal intervals in the first horizontal direction (i.e., the X direction), the front-rear partitions 24 are provided at equal intervals in the second horizontal direction (i.e., the Y direction), and the planar shape of each storage space S0 is a rectangular shape.

Each side partition 23 and each front-rear partition 24 are fitted and fixed to each other. Each side partition 23 extends so as to penetrate each front-rear partition 24. Each front-rear partition 24 extends so as to penetrate each side partition 23. The specific fitting structure of each side partition 23 and each front-rear partition 24 is not limited. Typically, notches (not shown) are formed in each of the side partitions 23 and each of the front-rear partitions 24, and the notches are fitted to each other, so that each of the side partitions 23 and each of the front-rear partitions 24 can be fixedly connected to each other.

The two side partitions 23 located outermost and the two front-rear partitions 24 located outermost define the inner space of the storage unit 11. The three side partitions 23 which are located between the two outermost side partitions 23 serve as first compartment portions 25 which divide the inner space of the storage unit 11 into two or more storage spaces S0 (in the illustrated example, four accommodations spaces S0) in the first horizontal direction (i.e., the X direction). The one front-rear partition 24 which is located between the two outermost front-rear partitions 24 serves as a second compartment portion 26 which divides the inner space of the storage unit 11 into two or more storage spaces S0 (in the illustrated example, two storage spaces S0) in the second horizontal direction (i.e., the Y direction).

Each of the plate-shaped members 22 penetrates each of the front-rear partitions 24 (including the second partition 26) in the second horizontal direction (i.e., the Y direction) and extends over the storage spaces S0 located adjacent to each other in the second horizontal direction. Each plate-shaped member 22 and each front-rear partition 24 are fitted and fixed to each other. Typically, a notch portion (not illustrated) of each plate-shaped member 22 and a notch portion (not illustrated) of each front-rear partition 24 are fitted to each other so that each plate-shaped member 22 and each front-rear partition 24 can be fixedly connected to each other. In this manner, a support portion 21 and an entry space S1 are provided in each storage space S0 and one bag bundle 80 is stored in each storage space S0.

The planar shape and size of a storage space S0 are determined according to the planar shape and size of a bag bundle 80. From the viewpoint of smoothly moving a bag bundle 80 in and out of a storage space S0, the planar size of a storage space S0 is preferably larger than that of a bag bundle 80. On the other hand, if the planar size of a storage space S0 is too large in comparison to that of a bag bundle 80, there is concern that a bag bundle 80 may drop from a support portion 21. Therefore, the planar size of a storage space S0 is made slightly larger than the planar size of a bag bundle 80 so that each side partition 23 and each front-rear partition 24 can function as stoppers that limit the movement of the bag bundle 80. For example, the margin (i.e., the spacing) between a bag bundle 80 placed on a support portion 21 and each of side partitions 23 and front-rear partitions 24 which are adjacent to the bag bundle 80 may be set to about 1 mm to 2 mm.

The side partitions 23 (including the first compartment portions 25) each have a communication space S4. Each communication space S4 faces the entry space S1 in an adjacent storage space S0 in the first horizontal direction (i.e., the X direction). In the illustrated example, since each side partition 23 is provided over a plurality of storage spaces S0 (that is, two storage spaces S0) which align in the second horizontal direction (i.e., the Y direction), each side partition 23 has two communication spaces S4. Each communication space S4 connects storage spaces S0 located adjacent to each other in the first horizontal direction (i.e., the X direction) with each other. At least a part of the holding device (in particular, the lower holding device 70b) moves between storage spaces S0 located adjacent to each other in the first horizontal direction (i.e., the X direction) through a communication space S4.

Each plate-shaped member 22, each side partition 23, and each front-rear partition 24 are supported by a base unit of the base assembly 40. The illustrated base assembly 40 includes a first base unit 41 and a second base unit 42 mounted on the first base unit 41, as shown in Fig. 7. Hereinafter, the first base unit 41 will be mainly described, and the second base unit 42 also basically has the same structure as the first base unit 41.

The first base unit 41 includes two first base frames 43 extending in the first horizontal direction (i.e., the X direction), two second base frames 44 extending in the second horizontal direction (i.e., the Y direction), and a third base frame 45 extending in the first horizontal direction. The both ends of one of the first base frames 43 are respectively fixed to ends of the two second base frames 44, and the both ends of the other first base frame 43 are respectively fixed to the other ends of the two second base frames 44. The third base frame 45 is located between the first base frames 43, and the both ends of the third base frame 45 are respectively fixed to parts corresponding to the center positions of the two second base frames 44.

Two engagement support members 47 extending upward are fixed to each of the first base frames 43, and a frame engagement member 46 extending in the first horizontal direction (i.e., the X direction) is fixed to the upper end portions of these two engagement support members 47.

As shown in Fig. 8, two first frame legs 48 extending in the second horizontal direction (i.e., the Y direction) and a second frame leg 49 extending in the first horizontal direction (i.e., the X direction) between the first frame legs 48 are attached to the lower surface of each of the first base frames 43. An engagement space S5 defined by the two first frame legs 48 and the one second frame leg 49 is formed below each of the first base frames 43. The engagement space S5 is located outside the corresponding second frame leg 49, and has a shape and a size such that a frame engagement member 46 can be fitted into the engagement space S5. When a frame engagement member 46 is fitted into the engagement space S5, the movement of the frame engagement member 46 in the first horizontal direction (i.e., the X direction) is restricted by the first frame legs 48, and the movement of the frame engagement member 46 in the second horizontal direction (i.e., the Y direction) is restricted by the second frame leg 49. Thus, it is possible to prevent the frame engagement member 46 from being unintentionally disengaged from the engagement space S5.

In the present embodiment, as shown in Fig. 7, the second base unit 42 is placed on the first base unit 41. Specifically, the frame engagement members 46 of the first base unit 41 are respectively arranged in the corresponding engagement spaces S5 (see Fig. 8) of the second base unit 42, so that the second base unit 42 is installed on the first base unit 41 in a state where the movement of the second base unit 42 in the horizontal direction is restricted.

In Figs. 7 and 8, the illustrations of the side partitions 23, the front-rear partitions 24 and the plate-shaped members 22 are omitted. Actually, as shown in Fig. 2, a plurality of side partitions 23, a plurality of front-rear partitions 24 and a plurality of plate-shaped members 22 are attached, in an upright state, to each of the first base unit 41 and the second base unit 42. In the illustrated example, the lower parts of the both end portions in the horizontal direction of each of the side partitions 23 form cutout portions, and these cutout portions are respectively fitted to and placed on the two first base frames 43. Further, the lower parts of the both end portions in the horizontal direction of each of the front-rear partitions 24 form cutout portions, and these cutout portions are respectively fitted to and placed on the two second base frames 44. Further, the lower parts of the both end portions in the horizontal direction of each of the plate-shaped members 22 form cutout portions, and these cutout portions are fitted to and placed on the two first base frames 43. A front-rear partition 24 (in particular, a front-rear partition 24 that serves as the second compartment portion 26) is located on the third base frame 45.

Next, an operation example of the bag bundle pickup system 10 will be described.

First, bag bundles 80 are placed on the respective support portions 21 of the storage unit 11 in such a manner that the bag bundles 80 are stored in the respective storage spaces S0. In the present embodiment, a bag bundle 80 is placed on each of the support portions 21 provided on the first base unit 41, a bag bundle 80 is placed on each of the support portions 21 provided on the second base unit 42, and the second base unit 42 is placed on the first base unit 41. The operation of accommodating the bag bundles 80 in the storage unit 11 and the operation of placing the second base unit 42 on the first base unit 41 may be performed by a human or may be performed by a machine.

A bag bundle 80 arranged in each storage space S0 is restricted from moving in the first horizontal direction (i.e., the X direction) by side partitions 23 and from moving in the second horizontal direction (i.e., the Y direction) by front-rear partitions 24. A part of the first thick part 91 of each bag bundle 80 is arranged in the first thickness arrangement space S2, and a part of the second thick part 92 of each bag bundle 80 is arranged in the second thickness arrangement space S3. The thin layer forming portion 93 of a bag bundle 80 is placed on the contact top part 29 of each support portion 21 (see Fig. 5). Therefore, each bag bundle 80 is supported by the corresponding support portion 21 in a state where the first thick part 91 and the second thick part 92 hang downward. As a result, the upward extension amounts of the first thick part 91 and the second thick part 92 of a bag bundle 80 in each storage space S0 can be reduced.

The hanging amounts (i.e., the downward amounts) of the first thick part 91 and the second thick part 92 of a bag bundle 80 supported by a support portion 21 are not limited. From the viewpoint of reducing the required space in the upward direction of the storage unit 11 (in particular, the plate-shaped members 22, the side partitions 23, and the front-rear partitions 24), it is preferable that a bag bundle 80 is supported by a support portion 21 in a storage space S0 in a state where the first thick part 91 and the second thick part 92 do not project above the upper surface position of the thin layer forming portion 93. Further, from the viewpoint of reducing the required space in the downward direction of the storage unit 11 (in particular, the plate-shaped members 22, the side partitions 23 and the front-rear partitions 24), it is preferable that the lowest position of each of the first thickness arrangement space S2 and the second thickness arrangement space S3 is at the same height as the lowest position of the entry space S1 or above the lowest position of the entry space S1. In particular, from the viewpoint of preventing the posture of a bag bundle 80 from being collapsed when the bag bundle 80 is taken out, it is preferable that the posture of a bag bundle 80 supported by a support portion 21 is closer to the posture of the bag bundle 80 lifted and held by the holding device (i.e., the upper holding device 70a and the lower holding device 70b). If the posture of a bag bundle 80 changes significantly when the bag bundle 80 is taken out, an unintended force caused by the change in the posture may be applied to the bag bundle 80, and thus there is concern that, in some cases, the bag bundle 80 may fall out of the holding device.

It may not be possible that, while a state where a bag bundle 80 is supported by a support portion 21 in a storage space S0 is achieved, both of a state where "the first thick part 91 and the second thick part 92 do not project above the upper surface position of the thin layer forming portion 93" and a state where "the lowest positions of the first thickness arrangement space S2 and the second thickness arrangement space S3 are at the same height as the lowest position of the entry space S1 or above the lowest position of the entry space S1" are achieved. For example, as shown in Fig. 5, the thickness of the first thick part 91 may be larger than the total of the thickness size of the thin layer forming portion 93 and the size in the height direction (i.e., the Z direction) of the entry space S1. In such cases, when the condition where "the first thick part 91 and the second thick part 92 do not project above the upper surface position of the thin layer forming portion 93" is satisfied, the condition where "the lowest position of the first thickness arrangement space S2 is at the same height as the lowest position of the entry space S1 or above the lowest position of the entry space S1" cannot be satisfied. In such cases, from the viewpoint of preventing the posture of a bag bundle 80 from being collapsed when the bag bundle 80 is taken out, it is preferable that a bag bundle 80 is supported by a support portion 21 in a posture being closer to the posture of the bag bundle 80 lifted and held by the holding device (i.e., the upper holding device 70a and the lower holding device 70b). Therefore, in the illustrated example, a bag bundle 80 is supported by a support portion 21 in a state where the first thick part 91 and the second thick part 92 do not project above the upper surface position of the thin layer forming portion 93 and the lowest position of the first thickness arrangement space S2 is below the lowest position of the entry space S1.

From the viewpoint of stably supporting a bag bundle 80, it is preferable that the range of a bag bundle 80 supported by a support portion 21 is wide, and for example, it is preferable that the entire lower surface of a bag bundle 80 (except for the region exposed to the entry space S1) is in contact with a support portion 21 to be supported from below by the support portion 21. Note that, it is not necessary that the entire lower surface of a bag bundle 80 (excluding the region exposed to the entry space S1) is in contact with a support portion 21, and for example, a bag bundle 80 may be placed on a support portion 21 in a state where at least part of the first thick part 91 and/or the second thick part 92 is located away from the support portion 21.

After the work of accommodating bag bundles 80 in the storage unit 11 is completed, the storage unit 11 is sent to a pickup place by the conveyance unit 13. The work of placing the storage unit 11 on the conveyance unit 13 may be performed by a human or by a machine. Further, when it is not necessary to carry the storage unit 11 by using the conveyance unit 13, the conveyance unit 13 may not be provided. For example, when a work of accommodating bag bundles 80 in the storage unit 11 is performed in a state where the storage unit 11 is arranged at a pickup place, or when the storage unit 11 is carried to a pickup place by a human, the conveyance unit 13 may not be provided.

In a state where the storage unit 11 is arranged at a pickup place, bag bundles 80 are taken out from the storage unit 11 and sent to a subsequent stage by the holding device (i.e., the upper holding device 70a and the lower holding device 70b) of the pickup unit 12.

The upper holding device 70a is moved in the first horizontal direction (i.e., the X direction) through a communication space(s) S4 and is arranged above a bag bundle 80 to be taken out (see Fig. 5). The lower holding device 70b is moved in the first horizontal direction (i.e., the X direction) through a communication space(s) S4 and an entry space(s) S1 and is arranged below a bag bundle 80 to be taken out (see Fig. 5). After that, the interval in the height direction (i.e., the Z direction) between the upper holding device 70a and the lower holding device 70b is narrowed in such a manner that the thin layer forming portion 93 of the bag bundle 80 is sandwiched and held by the upper holding device 70a and the lower holding device 70b. After that, the upper holding device 70a and the lower holding device 70b move in the height direction and the horizontal direction while maintaining a state of holding the bag bundle 80, and release the bag bundle 80 on the outside of the storage unit 11.

By repeating a series of these operations, a plurality of bag bundles 80 are sequentially taken out from the storage unit 11 and sent to the subsequent stage.

In the illustrated example, bag bundles 80 are sequentially taken out from a group (hereinafter, also referred to as "first group") of a plurality of storage spaces S0 (i.e., four storage spaces S0) arranged in the first horizontal direction (i.e., the X direction). After that, bag bundles 80 are sequentially taken out from a group (hereinafter, also referred to as "second group") of a plurality of storage spaces S0 (i.e., four storage spaces S0) arranged in the first horizontal direction (i.e., the X direction) at a position adjacent to the first group in the second horizontal direction (i.e., the Y direction). When bag bundles 80 are continuously taken out from the storage spaces S0 of each group, the holding device (i.e., the upper holding device 70a and the lower holding device 70b) may be moved from the outside of the storage unit 11 in the first horizontal direction (i.e., the X direction) so as to be arranged in a position corresponding to a bag bundle 80 to be taken out, or may be moved from a place near a bag bundle 80 to be taken out (for example, from an empty storage space S0 adjacent to the storage space S0 in which the bag bundle 80 to be taken out is arranged) in the first horizontal direction (i.e., the X direction) so as to be arranged in the position corresponding to the bag bundle 80 to be taken out.

The pickup unit 12 repeats the above-mentioned operations until all the bag bundles 80 are taken out from the storage unit 11. As described above, the base assembly 40 of the present embodiment includes the first base unit 41 and the second base unit 42. Thus, the pickup unit 12 first takes out bag bundles 80 from the second base unit 42, then lifts the second base unit 42 upward and removes the second base unit 42 from the first base unit 41, and moves the second base unit 42 to a discharge place (not shown). The pickup unit 12 releases the second base unit 42 at the discharge place and then performs a work of taking out bag bundles 80 from the first base unit 41. The pickup unit 12 may use the holding device (i.e., the upper holding device 70a and the lower holding device 70b) so as to remove the second base unit 42 from the first base unit 41, and may use another means so as to remove the second base unit 42 from the first base unit 41.

The storage unit 11 in which all the bag bundles 80 have been taken out and emptied is moved from the pickup place by a human or by a machine. Then, another storage unit 11 storing bag bundles 80 is arranged at the pickup place, and the bag bundles 80 are similarly taken out from the storage unit 11.

As described above, according to the bag bundle pickup system 10 and the storage unit 11 of the present embodiment, a part other than the thick parts (i.e., the first thick part 91 and the second thick part 92) of a bag bundle 80 is placed on the contact top part 29 of each support portion 21. Thus, while an increase in the occupied space in the height direction (i.e., the Z direction) of the storage unit 11 can be suppressed, it is possible to stably hold a bag bundle 80 having a locally thick part in the storage unit 11.

In particular, the thickness arrangement spaces (i.e., the first thickness arrangement space S2 and the second thickness arrangement space S3), in which the thick parts (i.e., the first thick part 91 and the second thick part 92) of a bag bundle 80 are to be stored, are provided on the same side as the entry space S1 with respect to the bag bundle 80. In this situation, the thickness arrangement spaces can be provided by effectively utilizing the area in the height direction necessary for forming the entry space S1, and an increase in the height direction in the occupying space of the storage unit 11 caused by forming the thickness arrangement spaces can be effectively curbed.

Further, since the thickness arrangement cutouts 30 and the entry forming cutout 31 are formed in each support portion 21, the entry space S1, the first thickness arrangement space S2 and the second thickness arrangement space S3 can be provided with high accuracy to have desired sizes at desired relative positions.

Further, since the plate-shaped members 22, the side partitions 23 and the front-rear partitions 24 which can be separated from each other are used, each plate-shaped member 22, each side partition 23 and each front-rear partition 24 can be removed as necessary, and thus maintenance can be easily performed.

Further, since the contact top part 29 is provided between a thickness arrangement cutout 30 and the entry forming cutout 31, a bag bundle 80 can be stably supported by each support portion 21. In particular, the contact top part 29 preferably supports a contact portion of a bag bundle 80 with which the holding device (i.e., the upper holding device 70a and the lower holding device 70b) comes into contact when the bag bundle 80 is held, or a portion of the bag bundle 80 close to the contact portion. In this situation, a support portion 21 can support a bag bundle 80 in a state close to the posture of the bag bundle 80 lifted and held by the holding device (i.e., the upper holding device 70a and the lower holding device 70b).

Further, since a communication space S4 is formed in each side partition 23, the holding device (i.e., the upper holding device 70a and the lower holding device 70b) can be smoothly and quickly moved to a bag bundle 80 to be taken out.

Further, since each support portion 21 is formed by a plurality of plate-shaped members 22, the weight can be reduced while the support performance of each support portion 21 can be prevented from being deteriorated.

In addition, since each plate-shaped member 22 penetrates the front-rear partitions 24 (in particular, the second compartment portion 26) in the second horizontal direction (i.e., the Y direction) and extends over storage spaces S0 located adjacent to each other in the second horizontal direction, the structure of the storage unit 11 can be simplified.

### [Variations]

The present invention is not limited to the above-described embodiments and modifications. For example, various modifications may be added to each element of the above-described embodiments and modifications. Further, the configurations of the above-described embodiments and modifications may be combined in whole or in part.

For example, in the above-described embodiment, each bag bundle 80 has thick parts (that is, the first thick part 91 and the second thick part 92) at both end parts, but may have only one thick part (for example, only the first thick part 91). In this situation, only one thickness arrangement space (for example, the first thickness arrangement space S2) may be provided in each storage space S0. Even when each bag bundle 80 has only one thick part, each support portion 21 (for example, each plate-shaped member 22) may have cutouts at positions corresponding to both end parts of each bag bundle 80 in the second horizontal direction (i.e., the Y direction). In this situation, each support portion 21 can support a bag bundle 80 in a state close to the posture of the bag bundle 80 lifted and held by the holding device (i.e., the upper holding device 70a and the lower holding device 70b), and thus it is possible to stabilize the pickup work for bag bundles 80.

Further, in the above-described embodiment, the separable plate-shaped members 22, the separable side partitions 23 and the separable front-rear partitions 24 are fixed to each other by being fitted to each other, but two or more of these elements may be inseparably attached to each other. Further, the plate-shaped members 22, the side partitions 23, and the front-rear partitions 24 may be inseparably coupled to the base units (i.e., the first base unit 41 and the second base unit 42).

Further, each support portion 21 may be configured by a block body (not illustrated) instead of plate-shaped members 22.

Further, while the holding device sandwiches a bag bundle 80 to hold it in the above-described embodiment, the holding device may adopt other holding methods. For example, the holding device may not include the upper holding device 70a and a bag bundle 80 may be supported with the holding device by being placed on the lower holding device 70b.

Further, while the storage unit 11 of the above-described embodiment is configured to be able to store a plurality of bag bundles 80, the storage unit 11 may be able to store only one bag bundle 80. In this situation, the storage unit 11 may include only one support portion 21.

Further, the base assembly 40 of the above-described embodiment includes two base units (i.e., the first base unit 41 and the second base unit 42), but the base assembly 40 may have a single-stage configuration including only one base unit and may have a configuration of three or more stages including three or more base units.

## Claims

1. A bag bundle pickup system (80) comprising:
a storage unit (11) in which one or more bag bundles (80) are stored; and
a pickup unit (12) which takes out the one or more bag bundles (80) from the storage unit (11), wherein:
each of the one or more bag bundles (80) includes a plurality of bags (81) and has a thick part (91, 92) having a locally large thickness,
the storage unit (11) includes: one or more support portions (21) each of which a bag bundle (80) is placed on; and an entry space (S1) located below a bag bundle (80) when the bag bundle (80) is placed on each support portion (21),
the pickup unit (12) includes a holding device (70a, 70b) which at least partially enters the entry space (S1) and holds a bag bundle (80) located above the entry space (S1),
each support portion (21) has a contact part (28) which comes into contact with a bag bundle (80) being placed thereon, and
a part of a bag bundle (80) other than the thick part (91, 92) is placed on a contact top part (29) which is located at a highest position of the contact part (28) of each support portion (21).

2. The bag bundle pickup system (10) as defined in claim 1, wherein:
each support portion (21) includes a thickness arrangement cutout(30a, 30b) which defines a thickness arrangement space (S2, S3), and
at least a part of the thick part (91, 92) of a bag bundle (80) placed on each support portion (21) is positioned in the thickness arrangement space (S2, S3) of each support portion (21).

3. The bag bundle pickup system (10) as defined in claim 1 or 2, wherein each support portion (21) includes an entry forming cutout (31) which defines the entry space (S1).

4. The bag bundle pickup system (10) as defined in claim 2, wherein:
each support portion (21) includes an entry forming cutout (31) which defines the entry space (S1), and
the contact top part (29) of each support portion (21) is positioned between the thickness arrangement cutout(30a, 30b) and the entry forming cutout (31) in a horizontal direction.

5. The bag bundle pickup system (10) as defined in any one of claims 1 to 4, comprising a first compartment portion (25) which divides a space of the storage unit (11) into two or more storage spaces (S0) in a first horizontal direction (X), wherein:
a support portion (21) and an entry space (S1) are provided in each of the two or more storage spaces (S0),
the first compartment portion (25) includes a communication space (S4) connecting storage spaces (S0) which are positioned adjacent to each other in the first horizontal direction (X), and
at least a part of the holding device (70a, 70b) moves, through the communication space (S4), between the storage spaces (S0) which are positioned adjacent to each other in the first horizontal direction (X).

6. The bag bundle pickup system (10) as defined in any one of claims 1 to 5, wherein:
each support portion (21) includes a plurality of plate-shaped members (22) which extend in a height direction (Z) and are positioned away from each other in a horizontal direction, and
the contact part (28) is configured by upper end surfaces of the plurality of plate-shaped members (22).

7. The bag bundle pickup system (10) as defined in claim 6, comprising a second compartment portion (26) which divides a space of the storage unit (11) into two or more storage spaces (S0) in a second horizontal direction (Y), wherein:
a support portion (21) and an entry space (S1) are provided in each of the two or more storage spaces (S0), and
each of the plurality of plate-shaped members (22) penetrates the second compartment portion (26) in the second horizontal direction (Y) and extends over storage spaces (S0) positioned adjacent to each other in the second horizontal direction (Y).

8. A storage unit (11) in which one or more bag bundles (80) are stored, the storage unit (11) comprising:
one or more support portions (21) each of which a bag bundle (80) is placed on; and
an entry space (S1) which is located below a bag bundle (80) when the bag bundle (80) is placed on each support portion (21), wherein:
each of the one or more bag bundles (80) includes a plurality of bags (81) and has a thick part (91, 92) having a locally large thickness,
each support portion (21) has a contact part (28) which comes into contact with a bag bundle (80) being placed thereon, and
a part of a bag bundle (80) other than the thick part (91, 92) is placed on a contact top part (29) which is located at a highest position of the contact part (28) of each support portion (21).
